# EUROPEAN PATENT APPLICATION

(11) **EP 1 921 337 A1**
(43) Date of publication of application: **14.05.2008**
(21) Application number: 06796923.8
(22) Date of filing: 29.08.2006
(51) Int. Cl.: F16D 3/20

(54) **FIXED TYPE CONSTANT VELOCITY UNIVERSAL JOINT**

(30) Priority: 31.08.2005 JP 2005252232; 31.08.2005 JP 2005252236; 16.09.2005 JP 2005270365; 16.09.2005 JP 2005270376
(71) Applicant: NTN Corporation, Osaka-shi, Osaka 550-0003 (JP)
(72) Inventor: YAMAZAKI, Kenta, Iwata-shi Shizuoka, 4380037 (JP); ISHIJIMA, Minoru, Iwata-shi Shizuoka, 4380037 (JP)
(74) Representative: Mischung, Ralf
(86) International application number: PCT/JP2006/316943
(87) International publication number: WO 2007/026676

(57) **Abstract**

The present invention provides a fixed constant velocity universal joint (A, B) that does not require a large outer ring outer diameter and in which an operating range (angle) of a centering mechanism per unit joint is only half (θ/2) the range in a conventional technology. The fixed constant velocity universal joint (A, B) of the invention includes a pair of unit joints. Each unit joint includes an outer ring (10) having ball grooves (14) on a spherical inner surface (12), an inner ring (20) having ball grooves (24) on a spherical outer surface (22), a ball (30) positioned between the ball groove (14) of the outer ring (10) and the ball groove (24) of the inner ring (20), and a cage (40) having pockets (46) for storing the balls (30). The outer rings (10) of the pair of unit joints are integrated. A centering mechanism (50) that roughly equalizes an operating angle θ of each unit joint is provided between the cages (40) of the pair of fixed constant velocity universal joints.

## Description

### TECHNICAL FIELD

The present invention relates to a fixed type constant velocity universal joint. The fixed type constant-velocity universal joint can, for example, be used for application in constant high-angle use, such as a steering joint.

### BACKGROUND ART

A constant velocity universal joint is broadly classified into a fixed type and a slide type. The fixed type allows only angular displacement between two input and output axes. The slide type allows the angular displacement and axial displacement. Each type is chosen in accordance with a working condition, application, and the like. A Rzeppa-type (referred to hereinafter as "BJ") and an undercut-free-type (referred to hereinafter as "UJ") are widely known as the fixed type constant velocity universal joint.

Both BJ and UJ include an outer ring, an inner ring, balls, and a cage. An inner circumference of the outer ring has a plurality of curved ball grooves. An outer circumference of the inner ring has a plurality of curved ball grooves. The ball is incorporated between the ball groove of the outer ring and the ball groove of the inner ring. The cage holds the ball. A center of the ball in the outer ring is positioned on an outer ring opening side of a center of a spherical inner surface of the outer ring. A center of the ball groove in the inner ring is positioned on an outer ring interior side of a spherical outer surface of the inner ring. The centers of the ball grooves in the outer ring and the ball grooves in the inner ring are offset by an equal distance in opposite axial directions. Therefore, a ball track formed by the ball grooves of the outer ring and the ball grooves of the inner ring is wedge-shaped and opens towards the outer ring opening side. In the BJ, an overall range of each ball groove is curved. However, in the UJ, one end of each ball groove is straight and in parallel with an axial line.

In Patent Document 1, a fixed constant velocity universal joint is proposed that can support a high angle by outer rings of two fixed constant velocity universal joints being integrated and operating angles of the two fixed constant velocity universal joints being controlled to be roughly equal through coordination between a centering pilot lever and a centering plate. The centering pilot lever is provided at a tip of each joint shaft. The centering plate is provided in an outer ring center.

In terms of function and processing, the fixed constant velocity universal joint has a gap (inter-ball groove gap) between the ball groove of the outer ring and the ball groove of the inner ring with the ball therebetween. A gap is also present between the spherical inner surface of the outer ring and a spherical outer surface of the cage. A gap is also present between the spherical outer surface of the inner ring and a spherical inner surface of the cage. The gaps appear as an amount of movement when one of either the inner ring or the outer ring is fixed and another is moved in a radial direction or an axial direction when the joint is in a neutral state. The gap is referred to as a radial gap or an axial gap depending on the direction of the movement. The gaps significantly affect play (rotation backlash) in a circumferential direction between the inner and outer rings. In particular, the wider the inter-ball groove gap is, the greater the rotation backlash. Therefore, a backlash of more than a certain amount cannot be prevented.

Therefore, to solve the issue, an elimination of the rotation backlash by the inter-ball groove gap of the fixed constant velocity universal joint being closed is proposed (Patent Document 2).

Patent Document 1: Japanese Patent Laid-open Publication No. Heisei 01-210619

Patent Document 2: Japanese Patent Laid-open Publication No. 2003-130082

### DISCLOSURE OF THE INVENTION

### PROBLEMS TO BE SOLVED BY THE INVENTION

In the constant velocity universal joint proposed in Patent Document 1, a problem is present in that a large operating angle of a unit joint cannot be provided because the pilot lever is provided on the shaft tip.

A first object of the present invention is to provide a fixed constant velocity universal joint with a higher angle through elimination of the above-described problem in the conventional technology. A second object of the present invention is to provide a fixed constant velocity universal joint with little rotation backlash.

### MEANS FOR SOLVING THE PROBLEMS

In a first aspect, a fixed constant velocity universal joint of the present invention includes a pair of fixed constant velocity universal joints. Each fixed constant velocity universal joint includes an outer ring having ball grooves on an spherical inner surface, an inner ring having ball grooves on a spherical outer surface, a ball provided between the ball groove of the outer ring and the ball groove of the inner ring, and a cage having pockets for storing the balls. Outer rings of the pair of fixed constant velocity universal joints are integrated. The fixed constant velocity universal joint includes a centering mechanism for roughly equalizing operating angles of the pair of fixed constant velocity universal joints.

In a second aspect, in the fixed constant velocity universal joint of the present invention, the centering mechanism includes a pilot lever provided in a cage of one fixed constant velocity universal joint and a guiding component provided in another fixed constant velocity universal joint used to receive the pilot lever.

In a third aspect, the fixed constant velocity universal joint of the present invention includes a play closing mechanism that relatively displaces the inner ring and the cage in an axial direction and eliminates rotation backlash.

In a fourth aspect, in the fixed constant velocity universal joint of the present invention, the play closing mechanism includes a pressing component provided on the inner ring side and a receiving component provided on the cage used to receive the pressing component, and elastically presses the inner ring to a widened opening side of the ball track.

In a fifth aspect, in the fixed constant velocity universal joint of the present invention, a ball groove phase of one fixed constant velocity universal joint and an inter-ball-groove phase of another fixed constant velocity universal joint match.

In a sixth aspect, in the fixed constant velocity universal joint of the present invention, a shift range between the ball groove phase of the one fixed constant velocity universal joint and the inter-ball-groove phase of the other fixed constant velocity universal joint is ±20 degrees.

In a seventh aspect, the fixed constant velocity universal joint of the present invention is a high-angle fixed constant velocity universal joint including a pair of constant velocity universal joints. Each constant velocity universal joint includes an outer ring on a spherical inner surface of which a plurality of track grooves are formed, an inner ring on a spherical outer surface of which a plurality of track grooves are formed, balls disposed on each of a plurality of ball tracks formed through a coordination between the track grooves of the outer ring and the track grooves of the inner ring, and a cage disposed between the outer ring and the inner ring that holds the balls. In the high-angle fixed constant velocity universal joint, an axis is provided such as to project from the outer ring of one constant velocity universal joint, an end of the axis is engaged with the inner ring of another constant velocity universal joint and connects the pair of constant velocity universal joints, and a ball and ball track axial gap closing mechanism is formed in each constant velocity universal joint.

In an eighth aspect, in the fixed constant velocity universal joint of the present invention, the axial gap closing mechanism includes a pressing section that applies an elastic pressing force in an axial direction and a receiving section that receives the pressing force from the pressing section. In the one constant velocity universal joint, one of either the pressing section or the receiving section is provided on an end of a shaft engaged with the inner ring and another is provided in the cage. In the other constant velocity universal joint, one of either the pressing section or the receiving section is provided on an end of the axis engaged with the inner ring and another is provided in the cage.

In a ninth aspect, the fixed constant velocity universal joint of the present invention is a high-angle fixed constant velocity universal joint including a pair of constant velocity universal joints and an intermediate shaft connecting the pair of constant velocity universal joints. Each constant velocity universal joint includes an outer ring on a spherical inner surface of which a plurality of track grooves are formed, an inner ring on a spherical outer surface of which a plurality of track grooves are formed, balls disposed on each of a plurality of ball tracks formed through a coordination between track grooves of the outer ring and the track grooves of the inner ring, and a cage disposed between the outer ring and the inner ring that holds the balls. In the high-angle fixed constant velocity universal joint, each inner ring is engaged with both ends of the intermediate shaft, connecting the pair of constant velocity universal joints, and a ball and ball track axial gap closing mechanism is formed in each constant velocity universal joint.

In a tenth aspect, in the fixed constant velocity universal joint of the present invention, the axial gap closing mechanism includes a pressing section that applies an elastic pressing force in an axial direction and a receiving section that receives the pressing force from the pressing section. One of either the pressing section or the receiving section is provided on an end of the intermediate shaft and another is provided in the cage.

In an eleventh aspect, in the fixed constant velocity universal joint of the present invention, an axis bearing device for position stability is provided in an axial direction center of the intermediate shaft.

In a twelfth aspect, in the fixed constant velocity universal joint of the present invention, an axis bearing device for position stability is provided on the outer ring.

In a thirteenth aspect, in the fixed constant velocity universal joint of the present invention, an axis bearing device for position stability is provided on the axis.

In a fourteenth aspect, in the fixed constant velocity universal joint of the present invention, track position phases and inter-track pitch phases of the pair of constant velocity universal gears are each matched.

In a fifteenth aspect, in the fixed constant velocity universal joint of the present invention, shifting of each of the track position phases and inter-track pitch phases of the pair of constant velocity universal joints is within a range of ±20 degrees.

In a sixteenth aspect, the fixed constant velocity universal joint of the present invention is used to connect steering shafts in a steering system.

### ADVANTAGE OF THE INVENTION

In the invention, a high-angle fixed constant velocity universal joint is achieved by the outer rings of the pair of constant velocity universal joints being integrated and a centering mechanism being provided between the cages of the pair of constant velocity universal joints. The centering mechanism roughly equalizes an operating angle of each joint.

In particular, as a result of the centering mechanism being provided between the cages, an operating range (angle) of the centering mechanism per unit joint is only half (θ/2) the range in the conventional technology, therefore being advantageous for angle increase.

In addition, the centering mechanism includes the pilot lever provided in the cage of one fixed constant velocity universal joint and a guiding component provided on the other fixed constant velocity universal unit used to receive the pilot lever. The pilot lever is controlled without a centering plate. Therefore, unlike in the conventional technology (Patent Document 1), a problem in which an outer diameter of the outer ring is large does not occur.

The fixed constant velocity universal joint that achieves the above-described effects can be advantageously used, for example, to connect steering shafts in a steering system.

### BRIEF DESCRIPTION OF THE DRAWINGS

Fig. 1 is a vertical cross-sectional view of a fixed constant velocity universal joint according to a first embodiment of the present invention;
Fig. 2 is a simplified diagram of a steering system;
Fig. 3 is a vertical cross-sectional view of a fixed constant velocity universal joint according to a second embodiment of the invention;
Fig. 4 is an enlarged view of main components of the joint in Fig. 3;
Fig. 5 is an enlarged view of the main components of the joint in Fig. 3;
Fig. 6(a) is a simplified diagram of a steering system, (b) is a simplified diagram of a fixed constant velocity universal joint for steering, and (c) is a simplified diagram of a fixed constant velocity universal joint for steering;
Fig. 7 is a line graph of torque and torsional angle of the joint in Fig. 3(b);
Fig. 8 is a line graph of torque and torsional angle of the joint in Fig. 3(c);
Fig. 9 is a line graph of torque and torsional angle when phase changes every 10°;
Fig. 10 is a cross-sectional view of a high-angle fixed constant velocity universal joint according to a third embodiment of the invention;
Fig. 11 is an enlarged sectional view of main components of the high-angle fixed constant velocity universal joint;
Fig. 12 is an enlarged sectional view of the main components of the high-angle fixed constant velocity universal joint;
Fig. 13 (A) and (B) are simplified diagrams of the high-angle fixed constant velocity universal joint;
Fig. 14 is a cross-sectional view of main components of a high-angle fixed constant velocity universal joint according to a fourth embodiment of the invention;
Fig. 15 is a cross-sectional view of a high-angle fixed constant velocity universal joint according to a fifth embodiment of the invention; and
Fig. 16 is cross-sectional view of main components of a high-angle fixed constant velocity universal joint according to a sixth embodiment of the invention.

### BEST MODE FOR CARRYING OUT THE INVENTION

Embodiments of the present invention will be described with reference to the accompanying drawings.

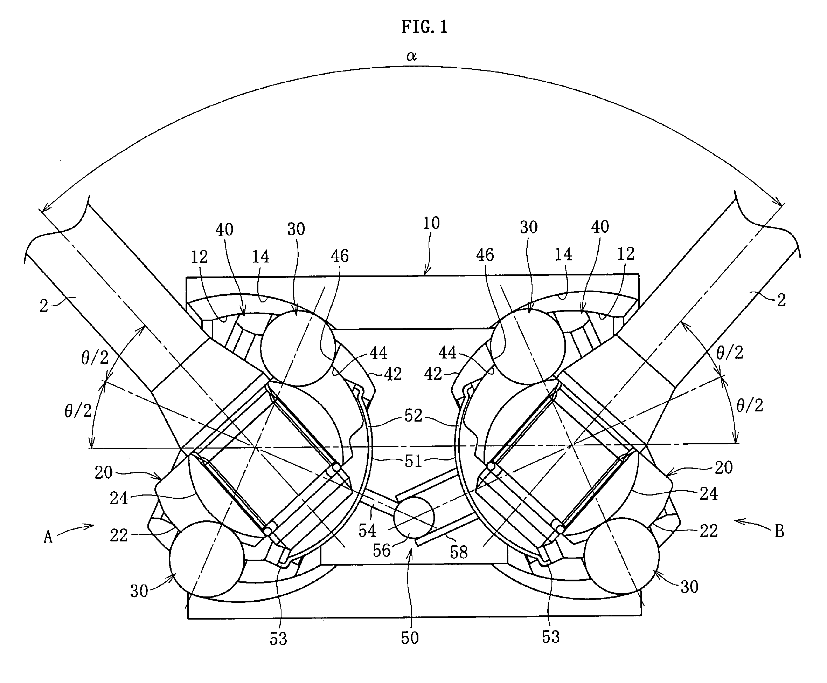

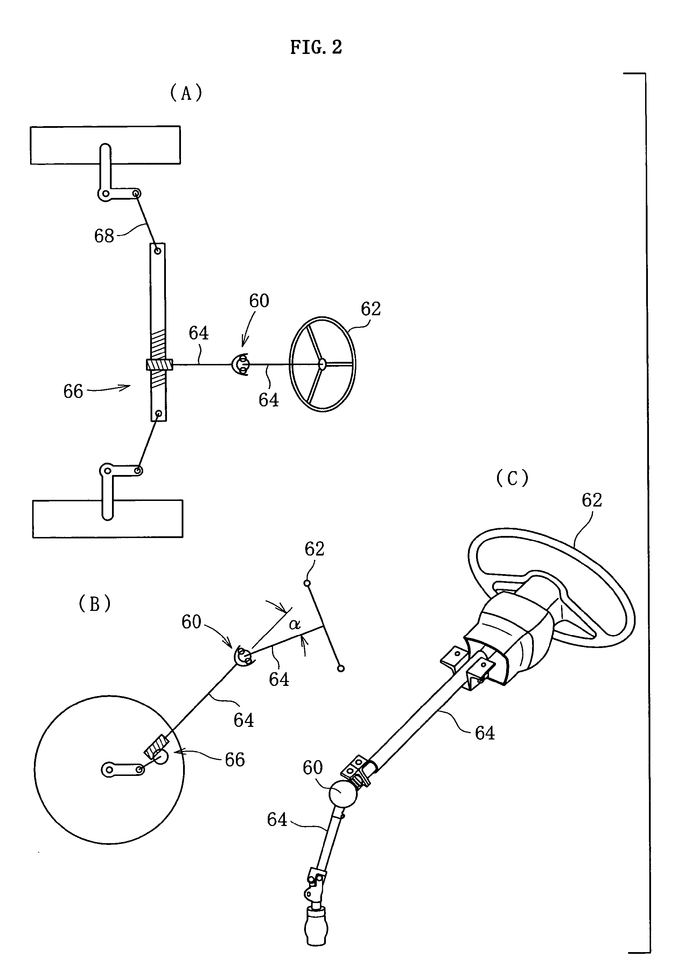

Fig. 1 shows a first embodiment when applied to a steering joint 60 in a steering system shown in Fig. 2. As shown in Fig. 1, a fixed constant velocity universal joint according to the first embodiment includes a pair of fixed constant velocity universal joints A and B having an outer ring 10. Hereinafter, each of the fixed constant velocity universal joints A and B will sometimes be referred to as a unit joint. The invention can be similarly applied to a UJ-type and other types of fixed constant velocity universal joints, and similar effects can be achieved. However, an example using a BJ-type will be described herein.

The unit joints A and B include the outer ring 10, an inner ring 20, a ball 30, and a cage 40 as main constituent elements. The outer ring 10 serves as an outer joint component. The inner ring 20 serves as an inner joint component. The ball 30 serves as a torque transmitting element. The inner ring 20 is connected to an output axis or an input axis. Here, the inner ring 20 is connected to a shaft 2 by a spline.

The outer ring 10 is an integration of a pair of outer rings of the unit joints A and B. The overall outer ring 10 is cylindrical. One end has an outer ring section for a unit joint A. Another end has an outer ring section for a unit joint B. In each outer ring section, ball grooves 14 extending in an axial direction are formed in equal disposal positions in a circumferential direction of a spherical inner surface 12. In the inner ring 20, ball grooves 24 extending in the axial direction are formed in an equal disposal position in a circumferential direction of a spherical outer surface 22. The ball 30 is incorporated between the ball groove 14 of the outer ring 10 and the ball groove 24 of the inner ring 20 that form a pair. The cage 40 is positioned between the spherical inner surface 12 of the outer ring 10 and the spherical outer surface 22 of the inner ring 20, such as to slide freely. The cage 40 has a plurality of pockets 46 in the circumferential direction. The pockets 46 are used to store the balls 30. A number of balls 30 can be six balls, eight balls, or another arbitrary number. The cage 40 holds all balls 30 on a same plane.

A spherical outer surface 42 of the cage 40 and the spherical inner surface 12 of the outer ring 10 are spherically fitted. A spherical inner surface 44 of the cage 40 and the spherical outer surface 22 of the inner ring 20 are spherically fitted. A center of the spherical inner surface 12 of the outer ring 10 and a center of the spherical outer surface 22 of the inner ring 20 match a joint center O. A center O1 of the ball groove 14 of the outer ring 10 and a center 02 of the ball groove 24 of the inner ring 20 are offset in the axial direction, each by an equal distance in opposite directions. Therefore, a ball track formed by the pair of ball grooves 14 and 24 is wedge-shaped, contracting from an opening side of the outer ring 10 towards an interior side.

In the fixed constant velocity universal joint, when the outer ring 10 and the inner ring 20 are at an operating angle θ, the balls 30 are maintained on a plane perpendicular to a bisector of the operating angle θ. Equal speed of the joints is ensured.

A cap 52 is attached to an end of the cage 40 on a contracting side of the wedge-shaped ball track. The cap 52 is lid-shaped, covering an end opening of the cage 40. The cap 52 is formed by a partially-spherical spherical surface 51 and a ring-shaped attaching section 53 formed on an outer circumference of the spherical surface 51. In one unit joint, here the unit joint A shown on a left side in Fig. 1, a pilot lever 54 is attached to a center of the spherical surface 51. The pilot lever 54 extends coaxially with the cage 40. A sphere 56 is fixed onto a tip of the pilot lever 54.

In the other unit joint, the fixed constant velocity universal joint B shown on a right side in Fig. 1, a pipe 58 is attached to the center of the spherical surface 51. The pipe 58 has a hole for receiving the sphere 56 and extends coaxially with the cage 40. A centering mechanism 50 is formed by the pilot lever (54 and 56), provided on the cage 40 of the one unit joint A, and the pipe 58, provided on the cage 40 of the other unit joint B. The pipe 58 serves as a guiding component,

As shown in the diagram, when the inner ring 20 is at the operating angle (θ) to the outer ring 10, the sphere 56 of the pilot lever 54 is received within the pipe 58 and relatively displaced. Therefore, the pair of unit joints A and B is centered. The entire fixed constant velocity universal joint formed by the pair of unit joints A and B achieves a high angle (α). Because the centering mechanism 50 is provided between cages 40, an operating range (angle) of the centering mechanism 50 per unit joint requires only half (θ/2) the range compared to that of the conventional technology (Patent Document 1). Because the pilot lever 54 performs control without a centering plate, an outer diameter of the outer ring is not required to be large.

The above-described fixed constant velocity universal joint can, for example, be used to connect steering shafts in a steering system. As shown in Fig. 2, the steering system transmits a rotating movement of a steering wheel 62 to a steering gear 66, via a steering column formed by a single or a plurality of steering shafts 64, thereby converting the rotating movement to a back-and-forth motion of a tie-rod 68. When the steering shafts 64 cannot be linearly disposed because of on-board space and the like, a single or a plurality of steering joints 60 are disposed between the steering shafts 64. Accurate rotating movement can be transmitted to the steering gear 66 even when the steering shafts 64 are bent.

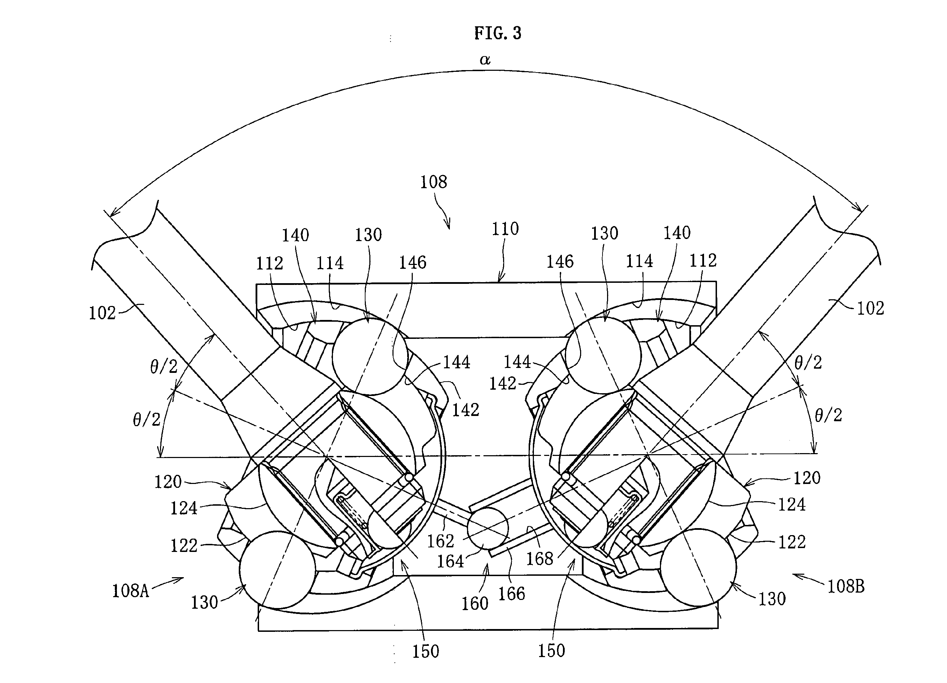

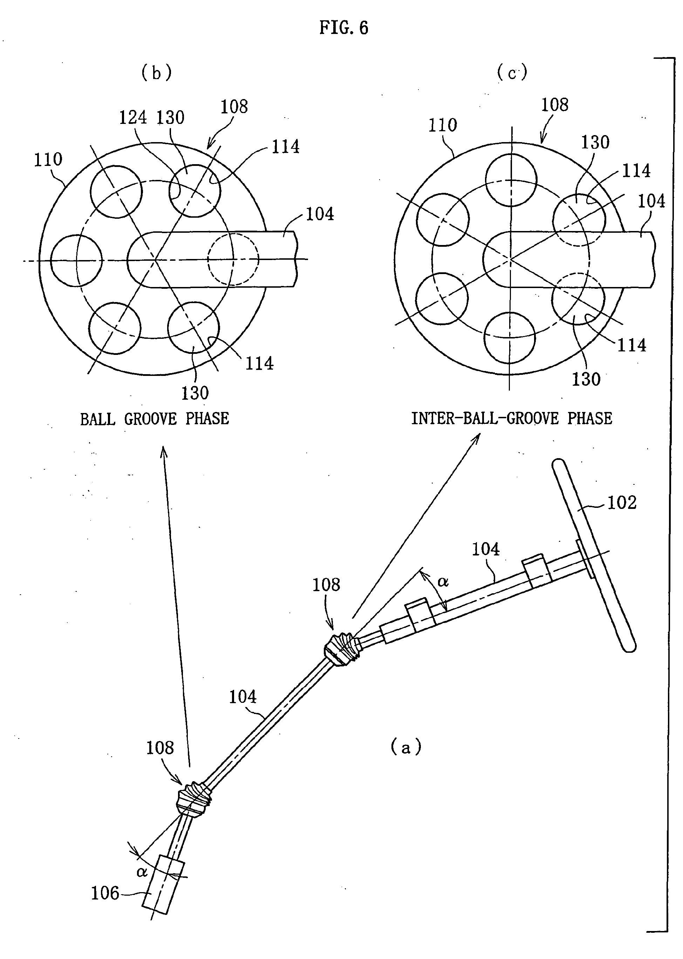

Next, a second embodiment of the invention will be described with reference to Fig. 3 to Fig. 9. First, a steering system will be briefly described with reference to Fig. 6(a). The steering system transmits a rotating movement of a steering wheel 102 to a steering gear 106, via a steering column formed by a plurality of steering shafts 104. Two fixed constant velocity universal joints 108 are disposed between the steering shafts 104. Accurate rotating movement can be transmitted to the steering gear 106 even when the steering shafts 104 are bent. Symbol α in Fig. 6(a) indicates a bending angle of the joint. The bending angle α can even be set to a large angle exceeding 30°.

Next, the fixed constant velocity universal joint 108 will be described. The fixed constant velocity universal joint 108 can be similarly applied to the UJ-type and other types of fixed constant velocity universal joints, and similar effects can be achieved. However, an example using the BJ-type will be described herein. According to the second embodiment shown in Fig. 3, the single fixed constant velocity universal joint 108 is formed by a pair of fixed constant velocity universal joints 108A and 108B having a shared outer ring. Hereinafter, the pair of fixed constant velocity universal joints 108A and 108B are sometimes referred to as unit joints.

Each unit joint 108A and 108B includes an outer ring 110, an inner ring 120, a ball 130, and a cage 140 as main constituent elements. The outer ring 110 serves as an outer joint component. The inner ring 120 serves as an inner joint component. The ball 130 serves as a torque transmitting element. The inner ring 120 is connected to an output axis or an input axis. Here, the inner ring 120 is connected to the steering shaft 104 by a serrated connection.

The outer ring 110 is shared between the pair of unit joints 108A and 108B. In other words, an overall shape is a single cylinder. One end provides an outer ring section of the unit joint 108A. Another end provides an outer ring section of the unit joint 108B. In each outer ring section, ball grooves 114 extending in the axial direction are formed in equal disposal positions in a circumferential direction of a spherical inner surface 112. In the inner ring 120, ball grooves 124 extending in the axial direction are formed in an equal disposal position in a circumferential direction of a spherical outer surface 122. The ball 130 is incorporated between the ball groove 114 of the outer ring 110 and the ball groove 124 of the inner ring 120 that form a pair. The cage 140 is positioned between the spherical inner surface 112 of the outer ring 110 and the spherical outer surface 122 of the inner ring 120, such as to slide freely. The cage 140 has a plurality of pockets 146 in the circumferential direction. The pockets 146 are used to store balls 130. The cage 140 holds all of the balls 130 on a same plane.

A spherical outer surface 142 of the cage 140 and the spherical inner surface 112 of the outer ring 110 are spherically fitted. A spherical inner surface 144 of the cage 140 and the spherical outer surface 122 of the inner ring 120 are spherically fitted. A center of the spherical inner surface 112 of the outer ring 110 and a center of the spherical outer surface 122 of the inner ring 120 match a joint center O. A center O1 of the ball groove 114 of the outer ring 110 and a center 02 of the ball groove 124 of the inner ring 120 are offset in the axial direction, each by an equal distance in opposite directions. Therefore, a ball track formed by the pair of ball grooves 114 and 124 is wedge-shaped, contracting from an opening side of the outer ring 110 towards an interior side. In other words, the ball track expands from the interior side of the outer ring 110 towards the opening side.

In the fixed constant velocity universal joint, as shown in Fig. 3, when the outer ring 110 and the inner ring 120 are at the operating angle θ, the balls 130 are maintained on a plane perpendicular to a bisector of the operating angle θ. Equal speed of the joints is ensured.

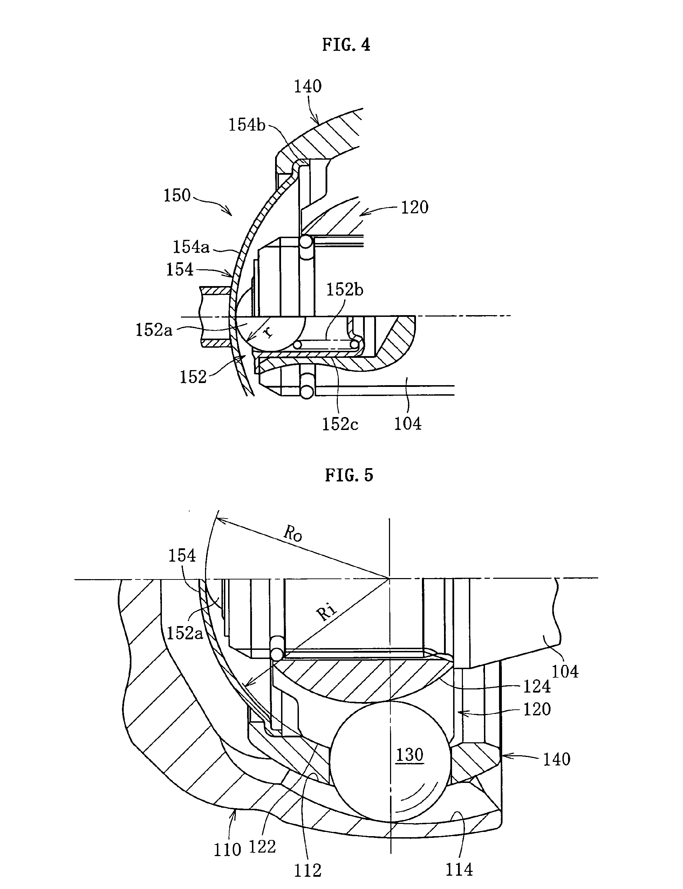

Next, a play closing mechanism 150 shown in Fig. 4 will be described. The play closing mechanism 150 includes a pressing component 152 and a receiving component 154.

The pressing component 152 is provided on an axial end of the steering shaft 104. The pressing component 152 includes a pressing section 152a, an elastic component 152b, and a case 152c. Here, a ball is given as an example of the pressing section 152a. However, a component of another shape having a partially convex spherical section can also be used. A compression coil spring is given as an example of the elastic component 152b. However, any component can be used as long as the component can apply an elastic force to the pressing section 152a, in a direction in which the component projects from the case 152c. An opening end of the case 152c is caulked such that the pressing section 152a does not fall. Therefore, the pressing section 152a, the elastic component 152b, and the case 152c form a sub-assembly that can be unit-handled. The case 152c is fixed onto a tip of the steering shaft 104 integrated with the inner ring 120 by spline connection, using an appropriate means such as press-fitting or adhesive.

The receiving section 154 is attached to an end of the cage 140 on an outer ring 110 interior side. The receiving section 154 is cap-shaped, covering an end opening of the cage 140. The receiving section includes a partially-spherical spherical surface 154a and an attaching section 154b. The attaching section 154b is formed on an outer periphery of the spherical surface 154a in the shape of a ring. An inner surface of the spherical surface 154a, in other words, a surface facing the steering shaft 104, is a concave spherical surface and functions as a receiving section receiving a pressing force from the pressing section 152a. The attaching section 154b is fixed onto an opening end of the cage 140 through a means such as press-fitting or welding.

When the joint is at the operating angle θ, as shown in Fig. 5, a radius Ro of the spherical surface 154a is greater than a radius r of the pressing section 152a (Ro>r) to allow the pressing component 152 and the receiving component 154 to slide smoothly. To prevent interference between the receiving component 154 and the inner ring 120 when the joint is at the operating angle θ, the radius Ro of the spherical surface 154a is greater than a radius Ri of the outer spherical surface 122 of the inner ring 120 (Ro>Ri).

In the above-described configuration, a spline axis of the steering shaft 104, on which a stopper ring is mounted, and the inner ring 120 are connected by a spline. When the spline axis and the inner ring 120 are completely connected, the pressing section 152a of the pressing component 152 and the spherical surface 154a of the receiving component 154 are in contact. The elastic component 152b is compressed. As a result, the inner ring 120 that is integrated with the steering shaft 104 is displaced in an axial direction, to the outer ring 110 opening side, by the elastic force. As a result of the displacement, the inner ring moves in a direction in which the gap between the ball and the ball groove closes. Therefore, the axial gap in the ball groove closes, preventing rotation backlash.

Next, a centering mechanism 160 will be described. In the fixed constant velocity universal joint 108A appearing on the left side in Fig. 3, a pilot lever 162 is fixed onto the spherical surface 154a of the receiving component 154. The pilot lever 162 extends coaxially with the cage 140 of the fixed constant velocity universal joint 108A. A sphere 164 is fixed onto a tip of the pilot lever 162. At the same time, in the fixed constant velocity universal joint 108B appearing on the right side in Fig. 3, a pipe 166 is fixed on to the spherical surface 154a of the receiving component 154. The pipe 166 extends coaxially with the cage 140 of the fixed constant velocity universal joint 108B. The pipe 166 has a hole 168 within. The pipe 166 receives the sphere 164 of the pilot lever 162 into the hole 168, such as to slide freely. The pipe 166 functions as a guiding component for the pilot lever 162. In this way, the centering mechanism 160 serves a role in roughly equalizing the operating angles θ of the fixed constant velocity universal joints 108A and 108B.

As is clear from Fig. 3, an operating angle of the fixed constant velocity universal joint 108 is indicated by the symbol α. The operating angle is a significantly higher angle than the operating angles θ of the fixed constant velocity universal joints 108A and 108B.

In the above-described fixed constant velocity universal joint 108, when the fixed constant velocity universal joint 108 is attached to a vehicle as a steering joint, when the ball groove 114 of the unit joint 108A and the ball groove 114 of the unit joint 108B are at a same phase, a bending phase of the steering shaft 104 when the vehicle is traveling straight is preferably arranged to be in the direction of the ball grooves 114 and 124 in the fixed constant velocity universal joint 108. In other words, a rotation direction phase at which a bending direction of the steering shaft 104 is the direction of the ball grooves 114 and 124 and a steering wheel rotation phase when the vehicle is traveling straight match. As a result, a deterioration of operability accompanying an increase in hysteresis can be prevented.

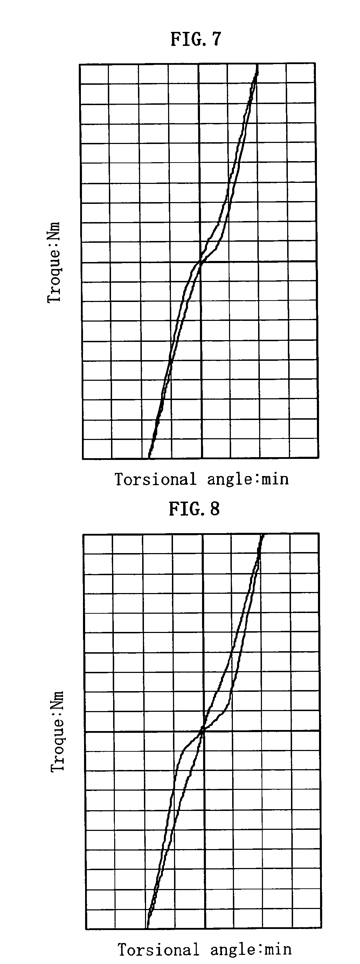

It is known that a hysteresis in a torque and torsion angle curve of the joint changes depending on the rotation direction phase when the fixed constant velocity universal joint 108 is attached to the vehicle, namely attached between the steering column and the steering gear. When the bending direction of the steering shaft when the fixed constant velocity universal joint 108 is attached to the vehicle is in the ball groove direction, as shown in Fig. 6(b), the hysteresis is small (Fig. 7). However, when the bending direction of the steering shaft is in an inter-ball-groove direction as shown in Fig. 6(c), the hysteresis is large (Fig. 8). A tendency such as this is prominent particularly when a set joint angle (α: Fig. 6[a]) is a large angle exceeding 30°.

The increase in the hysteresis in torque and torsion angle line graph of the joint affects steering wheel operability (directness) when an automobile is traveling straight. Therefore, the hysteresis is preferably small. When the bending phase of the steering shaft when the automobile is traveling straight is arranged to be in the ball groove direction, the deterioration of operability accompanying the increase in hysteresis can be prevented.

According to the embodiment shown in Fig. 6, the ball groove 114 of the outer ring 110 is processed such that a ball groove phase (Fig. 6[b]) of the one unit joint 108A and an inter-ball-groove phase (Fig. 6[c]) of the other unit joint 108B match. In this case, phase misalignment between the ball groove phase and the inter-ball-groove phase is preferably maintained at ±20° or less, with the ball groove phase as a baseline.

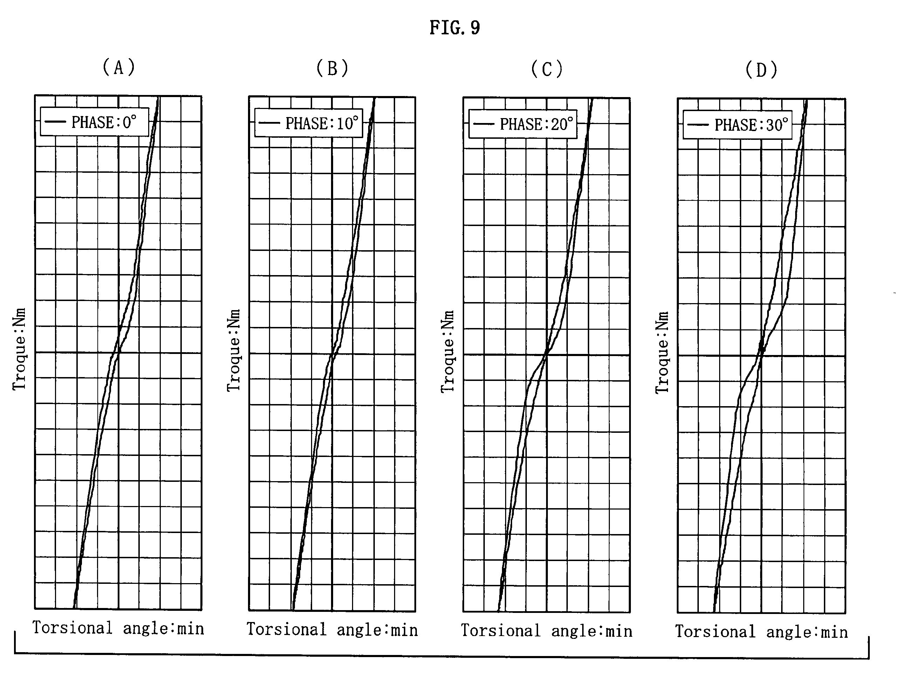

Fig. 9 is a line graph of play when the bending phase of the steering shaft is changed from the ball groove direction to the inter-ball-groove direction every 10°. Phase 0° (Fig. 9[A]) is the ball groove direction and phase 30° (Fig. 9[D]) is the inter-ball-groove direction. From this, it is clear that the hysteresis changes and slightly increases at phase 20° from the ball groove direction (Fig. 9[C]). Therefore, when the steering shaft direction is ±20° or less, with the ball groove phase as the baseline, the deterioration of operability accompanying the increase in hysteresis can be prevented or reduced.

An example of a fixed constant velocity universal joint using six balls is described. However, the present invention can be applied to when a large number of balls other than six balls are used.

According to the above-described second embodiment of the invention, the outer rings of the pair of fixed constant velocity universal joints having the play closing mechanism are integrated. The bending angles of the pair of fixed constant velocity universal joints are roughly equalized by the centering mechanism. As a result, a fixed constant velocity universal joint that is a single joint, has a high angle, and has no play (rotation backlash) can be provided. Because the centering mechanism is provided between the cages, the operating range (angle) of the centering mechanism per single joint is only half (θ/2) the range in the conventional technology. Furthermore, because a centering mechanism that does not use a centering plate is used, the outer diameter of the outer ring is not required to be large.

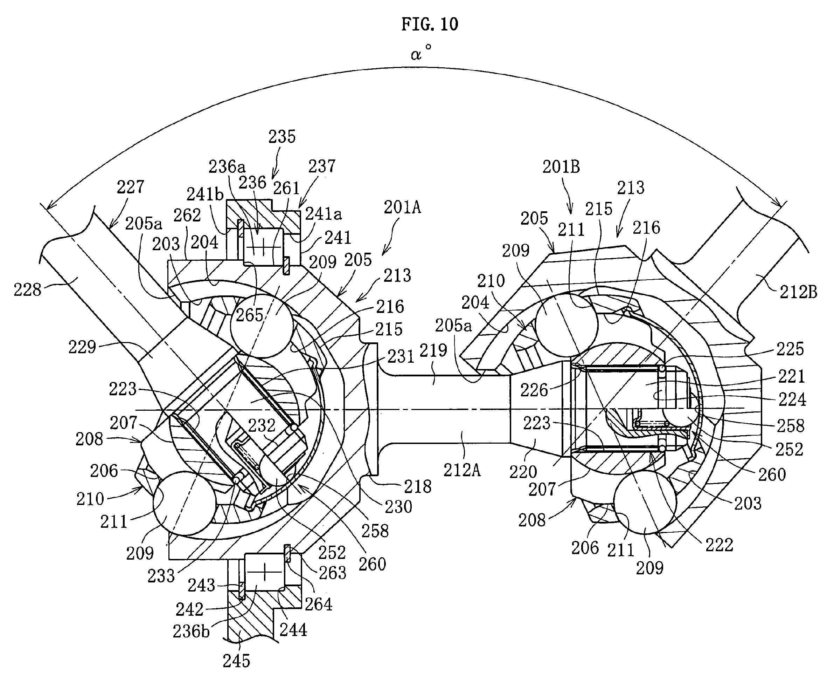

Next, a third embodiment of the invention will be described with reference to Fig. 10 to Fig. 13. Fig. 10 is an overall view of a high-angle fixed constant velocity universal joint according to the third embodiment of the invention. The high-angle fixed constant velocity universal joint includes a pair of fixed constant velocity universal joints 201A and 201B. The constant velocity universal joints 201A and 201B are connected by an axis 212A projecting from one constant velocity universal joint 201A.

Each constant velocity universal joint 201A and 201B includes an outer ring 205, an inner ring 208, balls 209, and a cage 210. In the outer ring 205, a plurality of track grooves 204 are formed on a spherical inner surface 203. In the inner ring 208, a plurality of track grooves 207 are formed on a spherical outer surface 206. The balls 209 are disposed on each of a plurality of ball tracks formed through coordination between a track groove 204 of the outer ring 205 and a track groove 207 of an inner ring 208. A plurality of pockets 211 holding the balls 209 are formed in the cage 210.

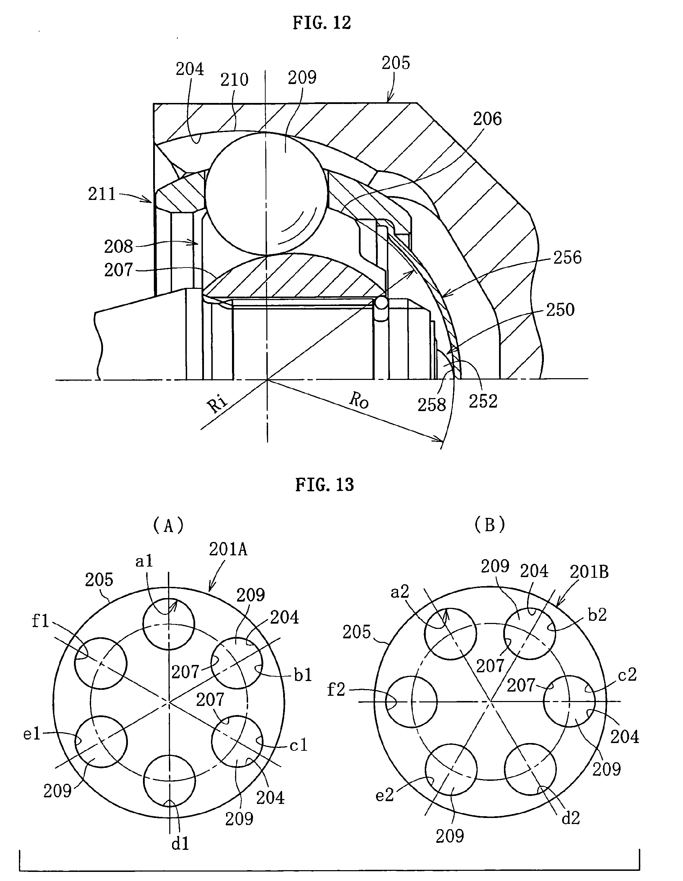

In other words, track grooves 204 and 207 are curved lines extending in the axial direction and are disposed at an even pitch along the circumferential direction (see Fig. 13[A] and [B]). The cage 210 is positioned between the spherical inner surface 203 of the outer ring 205 and the spherical outer surface 206 of the inner ring 208, such as to slide freely. The balls 209 (torque transmitting balls) are stored in the pockets 211 of the cage 210. The balls 209 are held at an even pitch along the circumferential direction.

Axes (stems) 212A and 212B are connected to a bottom wall of each outer ring 205. The outer ring 205 and the axis 212A form an outward component 213. The axis 212A projecting from the constant velocity universal joint 201A forms a connecting component, connecting the constant velocity universal joints 201A and 201B as described above.

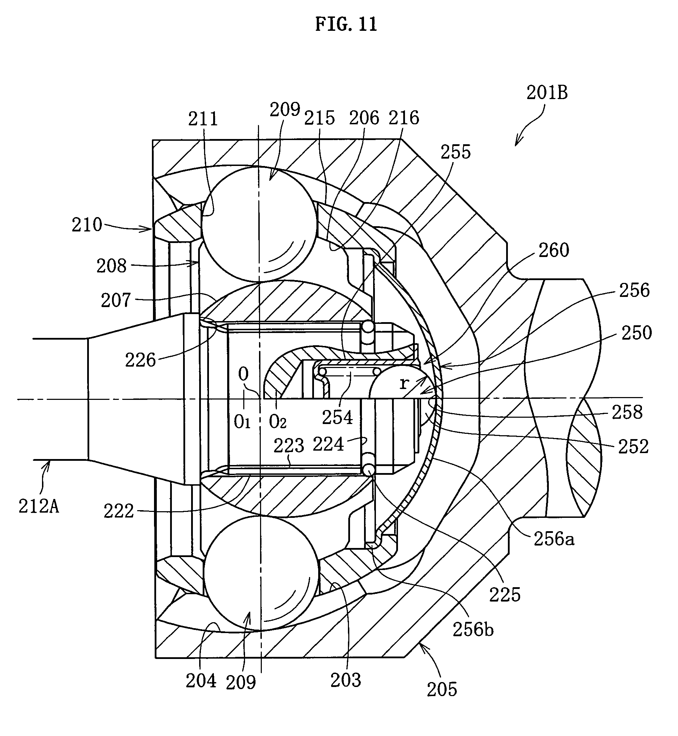

As shown in Fig. 11, a spherical surface 215 of the cage 210 and the spherical inner surface 203 of the outer ring 205 are spherically fitted. A spherical inner surface 216 of the cage 210 is spherically fitted with the spherical inner surface of the inner ring. A center of the spherical inner surface 203 of the outer ring 205 and a center of a spherical outer surface 206 of the inner ring 208 match the joint center O. A center O₁ of the track groove 204 of the outer ring 205 and a center O₂ of the track groove 207 of the inner ring 208 are offset in the axial direction, each by an equal distance in opposite directions. Therefore, a ball track formed by the pair of track grooves 204 and 207 is wedge-shaped, contracting from an opening side of the outer ring 205 towards an interior side. Fig. 11 shows the other constant velocity universal joint 201B. However, the one constant velocity universal joint 201A also has a same configuration.

As shown in Fig. 10, the axis 212A includes a reduced diameter section 219 and a spline forming section 221. The reduced diameter section 219 projects from an expanded section 218 of an outer surface of a bottom wall of the outer ring 205. The spline forming section 221 is connected to the reduced diameter section 219, via a tapered section 220 or the like. The tapered section 220 increases in diameter from the expanded section 218 side towards the spline forming section 221 side.

A spline 222 is formed on an outer circumferential surface of the spline forming section 221, as shown in Fig. 11. A spline 223 that engages with the spline 222 of the spline forming section 221 is formed on an inner circumferential surface of the inner ring 208 of the other constant velocity universal joint 201B. A stopper ring groove 224 is formed on the spline forming section 221 within an axial direction range of the spline 222. A stopper ring 225 is mounted on the stopper ring groove 224. A dislocation stopping structure for when the axis 212A is engaged with the inner ring 208 is formed. Splines 222 and 223 are formed by axial direction convex bars (convex teeth) disposed at a predetermined pitch along the circumferential direction and axial direction concave bars (concave teeth) disposed between the axial direction convex bars.

When the axis 212A of the one constant velocity universal joint 20 1 A engages with the inner ring 208 of the other constant velocity universal joint 201B, a stepped section 226 between the tapered section 220 of the axis 212A and the spline forming section 221 is positioned such as to be in contact with an end surface of the inner ring 208 (end surface on the outer ring opening side).

As shown in Fig. 10, a shaft 227 connected to the high-angle fixed constant velocity universal joint is engaged with the inner ring 208 of the one constant velocity universal joint 201A. The shaft 227 includes a reduced diameter section 228, a tapered section 229, and a spline forming section 230, as does the axis 212A.

A spline 231 is formed on an outer circumferential surface of the spline forming section 230. A spline 223 that engages with the spline 231 of the spline forming section 230 is formed on an inner circumferential surface of the inner ring 208 of the one constant velocity universal joint 201A. A stopper ring groove 232 is formed on the spline forming section 230 within an axial direction range of the spline 231. A stopper ring 233 is mounted on the stopper ring groove 232. A dislocation stopping mechanism for when the shaft 227 is engaged with the inner ring 208 is formed.

Each constant velocity universal joint 201A and 201B includes a ball and ball track axial gap closing mechanism 260. The axial gap closing mechanism 260 includes a pressing section 252 that applies an elastic pressing force in the axial direction and a receiving section 258 that receives the pressing force from the pressing section 252.

In this case, as shown in Fig. 11, a pressing component 250 is provided at an axial end of the axis 212A. The pressing component 250 includes a ball, a compression coil spring, and a case 255. The ball serves as the pressing section 252. The compression coil spring serves as an elastic component 254. The case 255 is used to assemble the pressing section 252 and the elastic component 254. The elastic component 254 works as an elastic force, through the pressing section 252. The pressing section 252 can have a convex spherical shape. The case 255 is fixed on to an end surface of the axis 212A through a means such as press-fitting or adhesive. Fig. 11 shows the other constant velocity universal joint 201B. Therefore, in the one constant velocity universal joint 201A, the pressing component 250 is provided on an end of the shaft 227.

In the cage 210, a receiving component 256 is attached to an end on the outer ring 205 interior side. The receiving component 256 is lid-shaped, covering an end opening of the cage 210. The receiving component 256 includes a partially-spherical spherical surface 256a and an attaching section 256b formed on an outer periphery of the spherical surface 256a in the shape of a ring. An inner surface of the spherical surface 256a is a concave spherical surface. The concave spherical surface functions as a receiving section 258 receiving the pressing force from the pressing section 252. The attaching section 256b is fixed onto an end of the cage 210 through a means such as press-fitting or welding.

When the joint is at the bending angle, as shown in Fig. 12, an inner diameter measurement Ro of the concave spherical receiving section 258 is greater than a radius r of the ball-shaped or convex spherical pressing section 252 (see Fig. 11) (Ro>r) to allow the pressing component 250 and the receiving component 256 to slide smoothly. To prevent interference between the receiving component 256 and the inner ring 208, the inner diameter measurement Ro of the receiving section 258 is greater than an outer diameter measurement Ri of the outer spherical surface 206 of the inner ring 208 (Ro>Ri).

The stopper ring 225 is mounted on the end of the axis 212A and engaged with the inner ring 208 by a spline. As a result, the two constant velocity universal joints 201A and 201B are connected via the axis 212A. In this connected state, the pressing section 252 of the pressing component 250 and the receiving section 258 of the receiving component 256 are in contact. The elastic component 254 is compressed. As a result, the inner ring 208 that is integrated with the axis 212A is displaced in the axial direction, to the outer ring 205opening side, by the elastic force. As a result of the displacement, the balls 209 disposed on the track grooves 204 and 207 are pressed in a reduction direction of the track grooves 204 and 207. In other words, the ball and ball track axial gap closing mechanism 260 closes the axial gap between the balls 209 on the track grooves 204 and 207 in the other constant velocity universal joint 201B, thereby preventing rotation backlash. In the one constant velocity universal joint as well, the axial gap closing mechanism 260 similarly closes the axial gap between the balls 209 on the track grooves 204 and 207, thereby preventing rotation backlash.

As shown in Fig. 10, in the state in which the two constant velocity universal joints 201A and 201B are connected via the axis 212A, as shown in Fig. 13(A) and (B), each track position phase and inter-track pitch phase of the pair of constant velocity universal joints 201A and 201B matches.

In other words, the track grooves 204 and 207 of each constant velocity universal joint 201A and 201B are disposed at a pitch of 60° along the circumferential direction. Phases of the track grooves 204 and 207 of a1 of the constant velocity universal joint 201A and phases of between the track grooves of a2 and b2 of the constant velocity universal joint 201B match. The phases can be shifted within a range of ±20°. The same applies to each of the track grooves 204 and 207.

As shown in Fig. 10, an axis bearing device 235 for position stability is mounted on the outer ring 205 of the one constant velocity universal joint 201A. The axis bearing device 235 includes an axis bearing 236 (such as a rolling bearing) and a case 237 externally fitted onto the axis bearing 236.

A reduced diameter section 261 and an increased diameter section 262 are provided on the outer circumferential surface of the outer ring 205. The axis bearing 236 is engaged with the reduced diameter section 261. In this case, a circumferential groove 263 is formed in the reduced diameter section 261. A stopper ring 264 is engaged with the circumferential groove 263. Therefore, an inner ring 236a of the axis bearing 236 is held between the stopper ring 264 and an end surface 265 formed between the reduced diameter section 261 and the increased diameter section 262.

The case 237 includes a short cylinder 241. An inner circumferential surface of the short cylinder 241 has a reduced diameter section 241a and an increased diameter section 241b. A circumferential groove 242 is formed on the increased diameter section 241b of the inner circumferential surface. A stopper ring 243 is engaged with the circumferential groove 242. As a result, an outer ring 236b of the axis bearing 236 is held between the stopper ring 243 and an end surface 244 formed between the reduced diameter section 241a and the increased diameter section 241b. A connecting piece 245 that projects from the short cylinder 241 is provided on the case 237. The connecting piece 245 is fixed onto a fixing section (not shown).

Therefore, when an angle formed by each constant velocity joint 201A and 201B is, for example, α, as shown in Fig. 10, α can be stably maintained. When the joint bends as shown in Fig. 10, the reduced diameter section 219 of the axis 212A corresponds to an opening end edge 205a of the outer ring 205 of the other constant velocity universal joint 201B. The reduced diameter section 228 of the shaft 227 corresponds with the opening end edge 205a of the outer ring 205 of the one constant velocity universal joint 201A. A swinging range of each outer ring 205 can be increased.

In the high-angle fixed constant velocity universal joint configured as described above, the end of the axis 212A of the one constant velocity universal joint 201A is engaged with the inner ring 208 of the other constant velocity universal joint 201B, and the pair of constant velocity universal joints are connected. Therefore, a high angle (large angle) can be supported. Furthermore, each constant velocity universal joint 201A and 201B includes the axial gap closing mechanism 260. Therefore, the gap between the track grooves 204 and 207 with the balls 209 therebetween can be closed. As a result, a high-angle fixed constant velocity universal joint that has no so-called rotational direction play and can support a large angle can be provided. In other words, occurrence of rotation backlash caused by the gap between the tracks can be prevented. In addition, the operating angle can become a high angle, optimizing the high-angle fixed constant velocity universal joint for application to a steering device (steering system) of an automobile.

The pair of constant velocity universal joints 201A and 201B can be connected by the axis 212A of the one constant velocity universal joint 201A, without use of a bolting component or the like. As a result, assembly operation can be simplified. Furthermore, a number of components is relatively small, component management is facilitated, and cost reduction can be achieved.

The axis bearing device 235 for position stability is provided in the one constant velocity universal joint 201A. Therefore, positions of the outer ring 205 and the like to an axis 212A stabilized. A stable operating angle can be achieved. As a result, transmission of rotational force can be performed smoothly. A highly accurate rotational force transmitting mechanism can be achieved.

Each track position phase and inter-track pitch phase of the pair of constant velocity universal joints 201A and 201B are matched. As a result, a maximum value of hysteresis in the torque and torsion angle line graph of the joint can be reduced. The operability of the automobile using the high-angle fixed constant velocity universal joint in the steering system can be enhanced. The phases can be shifted within a range of ±20°, because the maximum value of the hysteresis in the torque and torsion angle light graph of the joint can be reduced within this range. On the other hand, when the shift exceed the range, the maximum value of the hysteresis increases. The operability may deteriorate in accompaniment to the increase in hysteresis.

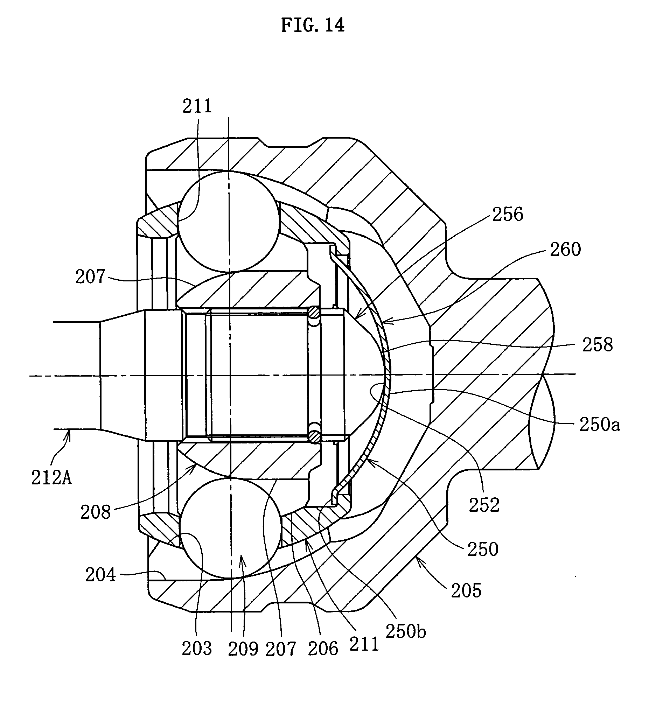

Fig. 14 is a cross-sectional view of main components according to a fourth embodiment. An example is shown in which, in the axial gap closing mechanism 260 in the high-angle fixed constant velocity universal joint, contrary to those in Fig. 10 to Fig. 13 of the third embodiment, the receiving section 258 is provided on the axis 212A and the shaft 227, and the pressing section 252 is provided in the cage 210. According to the fourth embodiment, the receiving component 256 projecting to the pressing section 252 side is provided on the end surface of the axis 212A. A tip of the convex spherical section of the receiving component 256 is the receiving section 258. According to the fourth embodiment, the convex spherical receiving section 258 is formed integrated with the axis 212A and the like. However, the receiving component 256 of another component can be attached to an axial end of the axis 212A and the like. Fig. 14 only shows the other constant velocity universal joint 201B. However, the one constant velocity universal joint 20 1 A has the same configuration.

According to the fourth embodiment, the pressing component 250 having the pressing section 252 is lid-shaped, covering the end opening of the cage 211, as is the receiving components in Fig. 10 to Fig. 13. The pressing component 250 includes a partially-spherical spherical surface 250a and a plurality of leg members 250b projecting from the outer periphery of the spherical surface 250a. An inner surface of the spherical surface 250a is a concave spherical surface. The concave spherical surface section functions as the pressing section 252 that applies elastic force in the axial direction, to the receiving section 258. At this time, to prevent interference between the pressing component 250 and the inner ring 208, the concave spherical pressing section 252 is formed having a larger diameter than the spherical outer surface 206 of the inner ring 208.

In the axial gap closing mechanism 260 according to the fourth embodiment, shown in Fig. 14, as well, the axis 212A and the shaft 227 are pressed to the outer ring opening side. As a result, the balls 209 is pressed to a contracting side of the track grooves 204 and 207. The axial gap between the balls and the ball track is closed in each constant velocity universal joint 201 A and 201 B.

In the high-angle fixed constant velocity universal joint according to the fourth embodiment, components that are the same as those in the high-angle fixed constant velocity universal joint according to the third embodiment are given the same reference numbers. Detailed explanations thereof are omitted.

Therefore, the high-angle fixed constant velocity universal joint according to the fourth embodiment can achieve the same operational effects as the high-angle fixed constant velocity universal joint according to the third embodiment

According to the third embodiment shown in Fig. 10. the axis bearing device 235 for position stability is provided on the outer ring 205 of the one constant velocity universal joint 201A. However, the axis bearing device 235 can also be provided on the axis 212A. In this case, a circumferential groove or the like with which a stopper ring engages is required to be provided on the axis 212A, as when the axis bearing device 235 is provided on the outer ring 205 shown in Fig. 10. When the axis bearing device 235 is provided on the outer ring 205, the axis bearing device 235 can be provided in the other constant velocity universal joint 201B or both of the constant velocity universal joints 201A and 201B.

According to the third and fourth embodiments, the constant velocity universal joints 201A and 201B are the BJ-types. However, the UJ-type or other types of constant velocity universal joints can be also be used. Furthermore, differing types can be used for the constant velocity universal joint 201A and the constant velocity universal joint 201B. The number of track grooves in the constant velocity universal joints 201A and 201 B is not limited to six grooves.

Between the two constant velocity universal joints 201A and 201B, one can use the ball and ball track axial gap closing mechanism 260 shown in Fig. 10 and the other can use the ball and ball track axial gap closing mechanism 260 shown in Fig. 14.

The above-described invention according to the third embodiment can support a high angle (large angle) and close the gap between the tracks with the ball therebetween. As a result, a high-angle fixed constant velocity universal joint that has no so-called rotational direction play and can support the large angle can be provided. In other words, the occurrence of rotation backlash caused by the gap between the tracks can be prevented. Furthermore, the operating angle can become a high angle. The high-angle fixed constant velocity universal joint is optimized for application to the steering device (steering system) of the automobile.

The pair of constant velocity universal joints can be connected by the axis of the one constant velocity universal joint, without use of a bolting component or the like. As a result, assembly operation can be simplified. Furthermore, a number of components is relatively small, component management is facilitated, and cost reduction can be achieved.

The axis bearing device for positioning stability is provided in an outer ring or the like of the one constant velocity universal joint. Therefore, a stable operating angle can be achieved. As a result, transmission of rotational force can be performed smoothly. A highly accurate rotational force transmitting mechanism can be achieved.

Each track position phase and inter-track pitch phase of the pair of constant velocity universal joints 201A and 201B match. The phases can be shifted within a range of ±20°. As a result, a maximum value of hysteresis in the torque and torsion angle line graph of the joint can be reduced. The operability of the automobile using the high-angle fixed constant velocity universal joint in the steering system can be enhanced.

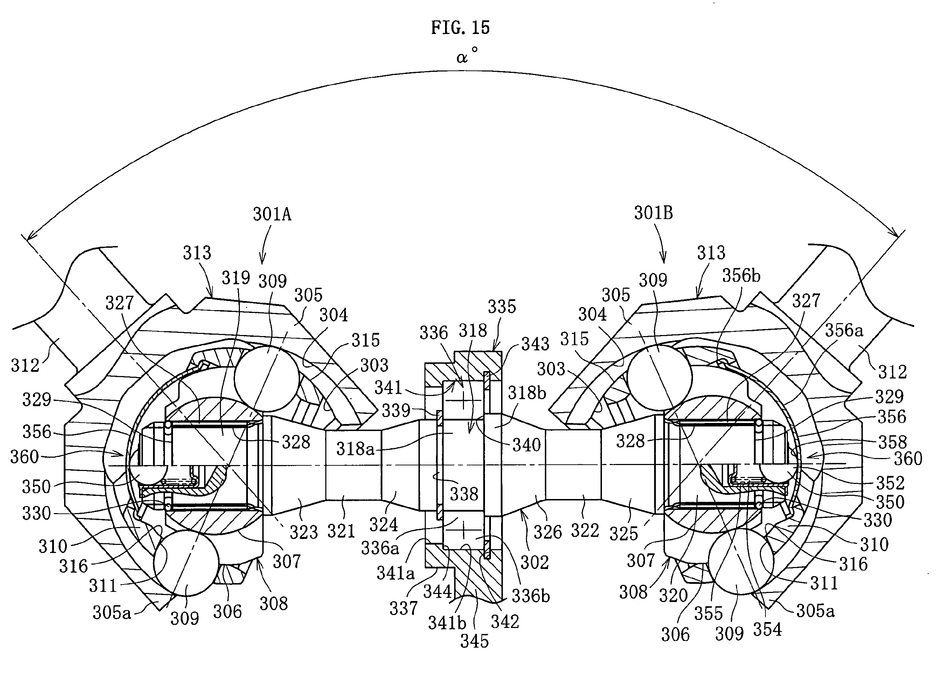

Next, the present invention according to a fifth embodiment will be described with reference to Fig. 15. Fig. 15 is an overall view of a high-angle fixed constant velocity universal joint according to the fifth embodiment. The high-angle fixed constant velocity universal joint includes a pair of constant velocity universal joints 301A and 302B and an intermediate shaft 302 connecting the constant velocity universal joints 301A and 301B.

Each constant velocity universal joint 301A and 301B has an outer ring 305, an inner ring 308, balls 309, and a cage 310. A plurality of track grooves 304 are formed on a spherical inner surface 303 of the outer ring 305. A plurality of track grooves 307 are formed on a spherical outer surface 306 of the inner ring 308. The balls 309 are each disposed on a plurality of ball tracks formed through coordination between the track grooves 304 of the outer ring 305 and the track grooves 307 of the inner ring 308. A plurality of pockets 311 that hold the balls 309 are formed in the cage 310.

In other words, the track grooves 304 and 307 are curved lines extending in the axial direction and are disposed at an even pitch along the circumferential direction (see supporting Fig. 13). The cage 310 is positioned between the spherical inner surface 303 of the outer ring 305 and the spherical outer surface 306 of the inner ring 308, such as to slide freely. The balls (torque transmitting balls) 309are stored in the pockets 311 of the cage 310. The balls 309 are held at an even pitch along the circumferential direction.

An axis (stem) 312 is connected to a bottom wall of the outer ring 305. The outer ring 305 and the axis 312 form an outward component 313.

As shown in the supporting Fig. 11, a spherical outer surface 315 of the cage 310 and the spherical inner surface 303 of the outer ring 305 are spherically fitted. A spherical inner surface 316 of the cage 310 is spherically fitted with the spherical outer surface 306 of the inner ring. A center of the spherical inner surface 303 of the outer ring 305 and a center of a spherical outer surface 306 of the inner ring 308 match the joint center O. A center O₁ of the track groove 304 of the outer ring 305 and a center O₂ of the track groove 307 of the inner ring 308 are offset in the axial direction, each by an equal distance in opposite directions. Therefore, a ball track formed by the pair of track grooves 304 and 307 is wedge-shaped, contracting from an opening side of the outer ring 305 towards an interior side. Fig. 11 shows the one constant velocity universal joint 301A. However, the other constant velocity universal joint 301B also has a same configuration.

As shown in Fig. 15, the intermediate shaft 302 includes an intermediate increased diameter section 318, spline forming sections 319 and 320 on both end sides, a reduced diameter section 321 formed between the spline forming section 319 and the intermediate increased diameter section 318, and a reduced diameter section 322 formed between the spline forming section 320 and the intermediate increased diameter section 318. A tapered section 323 that decreases in diameter from the spline forming section 319 side towards the reduced diameter section 321 is formed between the spline forming section 319 and the reduced diameter section 321. A tapered section 324 that increases in diameter from the reduced diameter section 321 towards the intermediate increased diameter section 318 is formed between the reduced diameter section 321 and the intermediate increased diameter section 318. A tapered section 325 that decreases in diameter from the spline forming section 320 side towards the reduced diameter section 322 is formed between the spline forming section 320 and the reduced diameter section 322. A tapered section 326 that increases in diameter from the reduced diameter section 322 towards the intermediate increased diameter section 318 is formed between the reduced diameter section 322 and the intermediate increased diameter section 318.

As shown in the supporting Fig. 11, a spline 327 is formed on an outer circumferential surface of each spline forming section 319 and 320. A spline 328 that engages with the spline 327 of the intermediate shaft 302 is formed on an inner circumferential surface of each inner ring 308. A stopper ring groove 329 is formed on the spline forming sections 319 and 320 within an axial direction range of the spline 327. A stopper ring 330 is mounted on the stopper ring groove 329. A dislocation stopping structure for when the intermediate shaft 302 is engaged with the inner ring 308 is formed. The splines 327 and 328 are formed by the axial direction convex bars (convex teeth) disposed at a predetermined pitch along the circumferential direction and the axial direction concave bars (concave teeth) disposed between the axial direction convex bars.

Each constant velocity universal joint 301A and 301B includes a ball and ball track axial gap closing mechanism 360. The axial gap closing mechanism 360 includes a pressing section 352 that applies an elastic pressing force in the axial direction and a receiving section 358 that receives the pressing force from the pressing section 352.

In this case, a pressing component 350 is provided at an axial end of the shaft 302. The pressing component 350 includes a ball, a compression coil spring, and a case 355. The ball serves as the pressing section 352. The compression coil spring serves as an elastic component 354. The case 355 is used to assemble the pressing section 352 and the elastic component 354. The elastic component 354 works as an elastic force, through the pressing section 352. The pressing section 352 can have a convex spherical shape. The case 355 is fixed on to an end surface of the shaft 302 through an appropriate means such as press-fitting or adhesive. The shaft 302 is integrated with the inner ring 308 by a serrated connection.

In the cage 310, a receiving component 356 is attached to an end on the outer ring 305 interior side. The receiving component 356 is lid-shaped, covering an end opening of the cage 310. The receiving component 356 includes a partially-spherical spherical surface 356a and an attaching section 356b formed on an outer periphery of the spherical surface 356a in the shape of a ring. An inner surface of the spherical surface 356a (a surface facing a shaft 302) is a concave spherical surface. The concave spherical surface functions as a receiving section 358 receiving the pressing force from the pressing section 352. The attaching section 356b is fixed onto an end of the cage 310 through an appropriate means such as press-fitting or welding.

When the joint is at the bending angle, as shown in the supporting Fig. 12, an inner diameter measurement Ro of the concave spherical receiving section 358 is greater than a radius r of the pressing section 352 that is ball-shaped or has a convex spherical surface (see supporting Fig. 11) (Ro>r) to allow the pressing component 350 and the receiving component 356 to slide smoothly. To prevent interference between the receiving component 356 and the inner ring 308, the inner diameter measurement Ro of the receiving section 358 is greater than an outer diameter measurement Ri of the spherical outer surface 306 of the inner ring 308 (Ro>Ri).

The stopper ring 330 is mounted on both ends of the intermediate shaft 302, engaged with the inner ring 308 by a spline. As a result, two constant velocity universal joints 301A and 301B are connected via the intermediate shaft 302. In this connected state, the pressing section 352 of the pressing component 350 and the receiving section 358 of the receiving component 356 are in contact. The elastic component 354 is compressed. As a result, the inner ring 308 that is integrated with the shaft 302 is displaced in the axial direction, to the outer ring 305 opening side, by the elastic force. As a result of the displacement, the balls 309 disposed on the track grooves 304 and 307 are pressed in a contracting direction of the track grooves 304 and 307. Therefore, the axial gap between the balls 309 and the track grooves 304 and 307 closes, thereby preventing rotation backlash.

As shown in Fig. 15, in the state in which the two constant velocity universal joints 301A and 301B are connected via the intermediate shaft 302, as shown in the supporting Fig. 13, each track position phase and inter-track pitch phase of the pair of constant velocity universal joints 301A and 301B match.

In other words, the track grooves 304 and 307 of each constant velocity universal joint 301A and 301B are disposed at a pitch of 60° along the circumferential direction. Phases of the track grooves 304 and 307 of a1 of the constant velocity universal joint 301A and phases of the inter-track grooves of a2 and b2 of the constant velocity universal joint 301B are matched. The phases can be shifted within a range of ±20°. The same applies to each of the track grooves 304 and 307.

An axis bearing device 335 for position stability is mounted in an axial direction center of the intermediate shaft 302, namely in the increased diameter section 318. The axis bearing device 335 includes a rolling axis bearing 336 and a case 337 fitted to an exterior of the axis bearing 336.

The increased diameter section 318 of the intermediate shaft 302 includes a reduced diameter first section 318a and an increased diameter second section 318b. The axis bearing 336 is externally engaged with the first section 318a. A circumferential groove 338 is formed on the first section 318a. A stopper ring 339 is engaged with the circumferential groove 338. Therefore, an inner ring 336a of the axis bearing 336 is held between the stopper ring 339 and an end surface 340 formed between the first section 318a and the second section 318b.

The case 337 includes a short cylinder 341. An inner circumferential surface of the short cylinder 341 has a reduced diameter section 341a and an increased diameter section 34 1b. A circumferential groove 342 is formed on the increased diameter section 341b of the inner circumferential surface. A stopper ring 343 is engaged with the circumferential groove 342. As a result, an outer ring 336b of the axis bearing 336 is held between the stopper ring 343 and an end surface 344 formed between the reduced diameter section 341a and the increased diameter section 341b. A connecting piece 345 that projects from the short cylinder 341 is provided on the case 337. The connecting piece 345 is fixed onto a fixing section (not shown).

Therefore, when an angle formed by each constant velocity joint 301A and 301B is, for example, α, as shown in Fig. 15, α can be stably maintained. When the joint bends as shown in Fig. 15, the reduced diameter sections 321 and 322 of the intermediate shaft 302 corresponds with an opening end edge 305a of the outer ring 305. A swinging range of the outer ring 305 to the shaft 302 can be increased.

The high-angle fixed constant velocity universal joint configured as described above includes the pair of constant velocity universal joints 301A and 301B, and the intermediate shaft 302 connected to the pair of constant velocity universal joints 301A and 301B. Therefore, a high angle (large angle) can be supported. Furthermore, each constant velocity universal joint 301A and 301B includes the ball and ball track axial gap closing mechanism 360. Therefore, the gap between the track grooves 304 and 307 with the balls 309 therebetween can be closed. As a result, a high-angle fixed constant velocity universal joint that has no so-called rotational direction play and can support a large angle can be provided. In other words, the occurrence of rotation backlash caused by the gap between tracks can be prevented. In addition, the operating angle can become a high angle. The high-angle fixed constant velocity universal joint is optimized for application to a steering device (steering system) of an automobile.

The pair of constant velocity universal joints 301A and 301B can be connected by the intermediate shaft 302, without use of a bolting component or the like. As a result, assembly operation can be simplified. Furthermore, a number of components is relatively small, component management is facilitated, and cost reduction can be achieved.

The axis bearing device 335 for position stability is provided in the axial direction center of the intermediate shaft 302. Therefore, position and the like of the outer ring 305 to the shaft 302 is stabilized. A stable operating angle can be achieved. As a result, transmission of rotational force can be performed smoothly. A highly accurate rotational force transmitting mechanism can be achieved.

Each track position phase and inter-track pitch phase of the pair of constant velocity universal joints 301A and 301B match. As a result, a maximum value of hysteresis in the torque and torsion angle line graph of the joint can be reduced. The operability of the automobile using the high-angle fixed constant velocity universal joint in the steering system can be enhanced. The phases can be shifted within a range of ±20°, because the maximum value of the hysteresis in the torque and torsion angle light graph of the joint can be reduced within this range. On the other hand, when the shift exceed the range, the maximum value of the hysteresis increases. The operability may deteriorate in accompaniment to the increase in hysteresis.

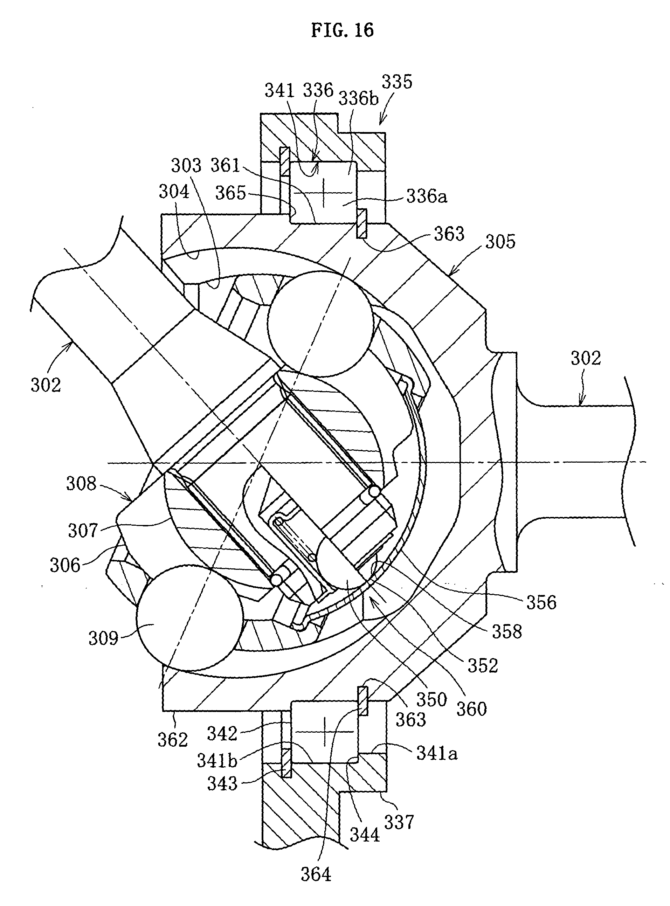

Fig. 16 is a cross-sectional view of main components according to a sixth embodiment. In this case, the axis bearing device 335 is mounted on the outer ring 305. In other words, a reduced diameter section 361 and the increased diameter section 362 are provided on the outer circumferential surface of the outer ring 305. The axis bearing 336 is engaged with the reduced diameter section 361. In this case, a circumferential groove 363 is formed in the reduced diameter section 361. A stopper ring 364 is engaged with the circumferential groove 363. As a result, an inner ring 336a of the axis bearing 336 is held between the stopper ring 364 and an end surface 365 formed between the reduced diameter section 361 and the increased diameter section 362.

An outer ring 336b of the axis bearing 336 is held between the stopper 343 and an end surface 344 formed between a reduced diameter section 341a and an increased diameter section 341b of the short cylinder 341 of the case 337.

In this way, a stable operating angle can also be achieved by the axis bearing device 335 for position stability being provided on the outer ring 305 of the constant velocity universal joints 301A and 301B. As a result, transmission of rotational force can be performed smoothly. A highly accurate rotational force transmitting mechanism can be achieved.

In the high-angle fixed constant velocity universal joint according to the sixth embodiment, components that are the same as those in the high-angle fixed constant velocity universal joint according to the fifth embodiment are given the same reference numbers. Detailed explanations thereof are omitted.

Therefore, the high-angle fixed constant velocity universal joint according to the sixth embodiment can achieve the same operational effects as the high-angle fixed constant velocity universal joint according to the fifth embodiment

The axial gap closing mechanism 260 that is the same as that in Fig. 14 can be provided in the high-angle fixed constant velocity universal joints according to the fifth and sixth embodiments. As a result of the axial gap closing mechanism 260 in Fig. 14 being provided, the shaft 302 is pressed to the outer ring opening side. As a result, the balls 309 are pressed to a contracting side of the track grooves 304 and 307. The axial gap between the balls and the ball track is closed.

In the fifth embodiment in Fig. 15, the axis bearing device 335 for position stability can be provided on the axis (stem) 312. In this case, a circumferential groove or the like that engages with the stopper ring is required to be provided on the axis 312, as in the axial direction center of the intermediate shift 302 shown in Fig. 15.

When the axis bearing device 335 is provided in the outer ring 305 of the constant velocity universal joint as shown in Fig. 16, the axis bearing device 335 is provided in the one constant velocity universal joint 301A according to the fifth embodiment in Fig. 15. However, the axis bearing device 335 can be provided in the other constant velocity universal joint 301B or in both of the constant velocity universal joints 301A and 301B.

In each embodiment, the constant velocity universal joints 301A and 301B are BJ-types. However, the constant velocity universal joints 301A and 301B can be the UJ-type or other types of constant velocity universal joints. Furthermore, differing types can be used for the constant velocity universal joint 301A and the constant velocity universal joint 301B. The number of track grooves in the constant velocity universal joints 301A and 301B is not limited to six grooves.

Between the two constant velocity universal joints 301A and 301B, one can use the ball and ball track axial gap closing mechanism 260 shown in Fig. 14 and the other can use the ball and ball track axial gap closing mechanism 360 shown in Fig. 16.

The above-described inventions according to the fifth and sixth embodiments can support a high angle (large angle) and close the gap between the tracks with the ball therebetween. As a result, a high-angle fixed constant velocity universal joint that has no so-called rotational direction play and can support a high angle (large angle) can be provided. In other words, the occurrence of rotation backlash caused by the gap between the tracks can be prevented. Furthermore, the operating angle can become a high angle. The high-angle fixed constant velocity universal joint is optimized for application to the steering device (steering system) of the automobile.

The pair of constant velocity universal joints can be connected by the intermediate shaft, without use of a bolting component or the like. As a result, assembly operation can be simplified. Furthermore, a number of components is relatively small, component management is facilitated, and cost reduction can be achieved.

The axis bearing device for positioning stability is provided in the axial direction center or the like of the intermediate shaft. Therefore, a stable operating angle can be achieved. As a result, transmission of rotational force can be performed smoothly. A highly accurate rotational force transmitting mechanism can be achieved.

Each track position phase and inter-track pitch phase of the pair of constant velocity universal joints match. The phases can be shifted within a range of ±20°. As a result, a maximum value of hysteresis in the torque and torsion angle line graph of the joint can be reduced. The operability of the automobile using the high-angle fixed constant velocity universal joint in the steering system can be enhanced.

## Claims

1. A fixed constant velocity universal joint (A, B) including a pair of fixed constant velocity universal joints, in which each fixed constant velocity universal joint includes an outer ring (10; 110; 205; 305) having ball grooves (14; 24; 114; 124) on an spherical inner surface (12; 44; 112; 144), an inner ring (20; 120; 208; 308) having ball grooves on a spherical outer surface (22; 42; 122; 206; 306), a ball (30; 130; 209; 309) provided between the ball groove of the outer ring and the ball groove of the inner ring, and a cage having pockets for storing the balls (30; 130; 209; 309);
wherein, outer rings (10; 110; 205; 305) of the pair of fixed constant velocity universal joints are integrated, and
a centering mechanism (50; 160) for roughly equalizing operating angles of the pair of fixed constant velocity universal joints is provided.

2. The fixed constant velocity universal joint according to claim 1, wherein:
the centering mechanism (50; 160) includes a pilot (54; 162) lever provided in a cage (58; 166) of one fixed constant velocity universal joint and a guiding component (54; 162) provided in another fixed constant velocity universal joint used to receive the pilot lever (54; 162).

3. The fixed constant velocity universal joint according to claim 1 or 2, comprising:
a play closing mechanism (150) that relatively displaces the inner ring (120) and the cage (140) in an axial direction and eliminates rotation backlash.

4. The fixed constant velocity universal joint according to claim 3, wherein:
the play closing mechanism (150) includes a pressing component (152) provided on the inner ring side and a receiving component (154) provided on the cage (140) used to receive the pressing component (152), and elastically presses the inner ring (120) to a widened opening side of the ball track.

5. The fixed constant velocity universal joint according to any one of claims 1 to 4, wherein:
a ball groove phase of one fixed constant velocity universal joint and an inter-ball-groove phase of another fixed constant velocity universal joint match.

6. The fixed constant velocity universal joint according to claim 5, wherein a shift range between the ball groove phase of the one fixed constant velocity universal joint and the inter-ball-groove phase of the other fixed constant velocity universal joint is ±20 degrees.

7. A high-angle fixed constant velocity universal joint (201 A, B; 301 A, B) including a pair of constant velocity universal joints, in which each constant velocity universal joint includes an outer ring (205; 305) having a plurality of track grooves (204; 304) on an spherical inner surface (203; 303), an inner ring (208; 308) having a plurality of track grooves (207; 307) on a spherical outer surface (206; 306), balls (209; 309) disposed on each of a plurality of ball tracks formed through a coordination between track grooves of the outer ring (205; 305) and the track grooves of the inner ring (208; 308), and a cage (210; 310) disposed between the outer ring (205; 305) and the inner ring (208; 308) and holding the balls (209; 309), the high-angle fixed constant velocity universal joint, wherein:
an axis is provided such as to project from the outer ring (205; 305) of one constant velocity universal joint, an end of the axis is engaged with the inner ring (208; 308) of another constant velocity universal joint and connects the pair of constant velocity universal joints, and a ball (209; 309) and ball track axial gap closing mechanism (260; 360) is formed in each constant velocity universal joint.

8. The high-angle fixed constant velocity universal joint according to claim 7,
wherein:
the axial gap closing mechanism (260; 360) includes a pressing section (252; 352) that applies an elastic pressing force in an axial direction and a receiving section (256; 356) that receives the pressing force from the pressing section (252; 352);
in the one constant velocity universal joint, one of either the pressing section (252; 352) and the receiving section (256; 356) is provided on an end of a shaft engaged with the inner ring and another is provided in the cage (210; 310); and
in the other constant velocity universal joint, one of either the pressing section (252; 352) and the receiving section (256; 356) is provided on an end of the axis engaged with the inner ring (208; 308) and another is provided in the cage (210; 310).

9. A high-angle fixed constant velocity universal joint (301 A, B) including a pair of constant velocity universal joints and an intermediate shaft (302) connecting the pair of constant velocity universal joints, in which each constant velocity universal joint includes an outer ring (305) having a plurality of track grooves (304) on an spherical inner surface (316), an inner ring (308) having a plurality of track grooves (307) on a spherical outer surface (306), balls (309) disposed on each of a plurality of ball tracks formed through a coordination between track grooves of the outer ring (305) and the track grooves of the inner ring (308), and a cage(310) disposed between the outer ring (305) and the inner ring (308) and holding the balls (309), the high-angle fixed constant velocity universal joint wherein:
each inner ring (308) engages with both ends of the intermediate shaft (302), connecting the pair of constant velocity universal joints, and a ball (309) and ball track axial gap closing mechanism (360) is formed in each constant velocity universal joint.

10. The high-angle fixed constant velocity universal joint according to claim 9,
wherein:
the axial gap closing mechanism (360) includes a pressing section (352) that applies an elastic pressing force in an axial direction and a receiving section (356) that receives the pressing force from the pressing section; and
one of either the pressing section (352) and the receiving section (356) is provided on an end of the intermediate shaft and another is provided in the cage (310).

11. The high-angle fixed constant velocity universal joint according to claim 9 or 10, wherein an axis bearing device (335) for position stability is provided in an axial direction center of the intermediate shaft (302).

12. The high-angle fixed constant velocity universal joint according to any one of claims 7 to 10, wherein an axis bearing device (335) for position stability is provided on the outer ring (305).

13. The high-angle fixed constant velocity universal joint according to any one of claims 7 to 10, wherein an axis bearing device (335) for position stability is provided on the axis.

14. The high-angle fixed constant velocity universal joint according to any one of claims 7 to 10, wherein track position phases and inter-track pitch phases of the pair of constant velocity universal gears are each matched.

15. The high-angle fixed constant velocity universal joint according to any one of claims 7 to 10, wherein shifting of each of the track position phases and inter-track pitch phases of the pair of constant velocity universal joints is within a range of ±20 degrees.

16. The high-angle fixed constant velocity universal joint according to any one of claims 1 to 15, wherein the high-angle fixed constant velocity universal joint is used to connect steering shafts (64) in a steering system (60).
